# EUROPEAN PATENT SPECIFICATION

(11) **EP 2 329 961 B1**
(45) Date of publication and mention of the grant of the patent: **03.04.2013**
(21) Application number: 09800212.4
(22) Date of filing: 22.07.2009
(51) Int. Cl.: B43L 19/00, C08K 3/26, C08L 7/00, C08L 27/06, C08L 93/00

(54) **ABRASIVE-CONTAINING ERASER**
SCHLEIFMITTELHALTIGER RADIERER
GOMME CONTENANT UN ABRASIF

(30) Priority: 25.07.2008 JP 2008192173
(43) Date of publication of application: 08.06.2011
(73) Proprietor: Seed Company Ltd., Osaka 534-0013 (JP)
(72) Inventor: MORIMOTO, Kazuki, Osaka-shi Osaka 534-0013 (JP); NISHIOKA, Yasuhiro, Osaka-shi Osaka 534-0013 (JP)
(74) Representative: Berryman, Natalia Grace
(86) International application number: PCT/JP2009/003438
(87) International publication number: WO 2010/010696

(56) References cited:
- EP-A1- 1 950 053
- EP-A1- 2 058 368
- WO-A1-2009/063579
- JP-A- 5 124 390
- JP-A- 6 297 896
- JP-A- 2004 143 315
- JP-A- 2004 155 884
- JP-A- 2005 255 722
- JP-A- 2007 284 495
- US-A- 4 335 033

## Description

### TECHNICAL FIELD

The present invention relates to an eraser containing an elastomer composition as a basic material and an abradant, for erasing writing inks, ball-point pens, printed matters, images formed by electro-static process copying machines, and the like, more specifically, to an abradant-containing eraser using an elastomer composition, which can be recycled, is friendly to the environment, and corresponds to the recycling society, without relying on fossil resources.

### BACKGROUND ART

Conventionally, industries and economies have been developed using fossil resources such as coal and petroleum oil and social systems based on mass production, mass consumption, and mass disposal have been established and many daily necessities have been based on the fossil resources whose depletion is now expected.
The present social systems have created economical affluence and convenience, but, on the other hand, wastes and carbon dioxide exceeding the natural purification capabilities have been discharged and it has resulted in serious environmental issues such as global warming and harmful substance generation.

In order to solve such problems, it is urgently required to reform today's one-way type social systems, in which a large quantity of commodities are produced from limited resources, consumed and disposed, and to shift the social systems to the recycling society, in which discharge of wastes can be suppressed and the limited resources can be advantageously utilized. To establish this recycling society, in our country, "Biomass Nippon Strategy" was decided upon by the Japanese government at a cabinet meeting held in December, 2002 and Japan has now been challenging reconstruction of the industrial competitive strength.

Biomass is sustainable and regenerable organic resources brought forth by natural blessings. Although biomass emits carbon dioxide when burned, carbon dioxide in atmospheric air is absorbed and fixed by photosynthesis at the time of plant growth and therefore biomass has a characteristic that it does not practically increase carbon dioxide. This is called "carbon neutral" and replacement of energy and commodities derived from fossil resources with biomass makes it possible to considerably lessen the carbon dioxide emission and accordingly, the techniques and product developments therefor have been acutely required.

In recent years, with respect to polymer materials as well, a plenty of proposals have been made in consideration of establishment of recycling society.
For instance, a composition for rubber production containing natural rubber and biodegradable plastics (in Examples, a vulcanizing agent and a vulcanization accelerator are used) is disclosed (Patent Literature 1), a biodegradable material composition obtained by mixing a biodegradable material, epoxylated polyisoprene, and if necessary, a crosslinking agent is disclosed (Patent Literature 2), a biodegradable rubber composition obtained by adding a biodegradable resin and a filler to natural rubber is disclosed (Patent Literature 3), a polylactic acid type resin composition containing crystalline polylactic acid, and a rubber component selected from natural rubber and polyisoprene is disclosed (Patent Literature 4), and a polymer blended material containing a continuous phase of polylactic acid and a dispersion phase of natural rubber or the like, evenly and finely dispersed in the continuous phase is disclosed (Patent Literature 5).

On the other hand, erasers can be broadly classified into three types: a vinyl chloride type eraser made of a vinyl chloride resin; a non-vinyl chloride type eraser made of a styrene type thermoplastic elastomer or an olefin type thermoplastic elastomer; and a natural rubber eraser.
Among them, more than 90 % of erasers in an eraser market are a vinyl chloride type eraser and a non-vinyl chloride type eraser. The polymer material, a plasticizer, and a softening agent composing the erasers are all materials derived from fossil resources such as petroleum oil and continuous use of these erasers is contradictory to the theme of the recycling society establishment.
On the other hand, for instance, natural rubber erasers utilize biomass such as subs (factices) produced from natural rubber and plant oils and is in accord with the theme of the recycling society establishment (Patent Literature 6, Non Patent Literature 1).

Meanwhile, the erasing mechanism of usual erasers is that a tip of the eraser disintegrates through abrasion to paper, the abrasion scraps adsorb graphite particles attached to fibers of the paper to thereby clean the paper. Accordingly, the abrasion scraps preferably have an appropriate plasticity and stickiness and their shape is preferably small. However, the dirty scraps must not damage the paper again through the reciprocating motion of the eraser. The insufficiently vulcanized product sometimes presents such a phenomenon.
On the other hand, in the case of writing inks, ball-point pens, printed matters, images formed by electro-static process copying machines, inks and toners deeply penetrate among fibers of the paper, and further, paints and pigments contained therein dye the fibers strongly. Accordingly, for erasing them, abradant-containing erasers (sometimes called "sand-containing erasers") are used.
The erasing mechanism of the abradant-containing erasers is to cut and shave off the dirty fibers and remove them, since inks and toners deeply penetrate among the fibers of paper and, paints and pigments dye the fibers strongly so that the sufficient erasing cannot be attained through the erasing mechanism as mentioned above. In this case, when the abrasive force is too strong, the erasing performance is good but fluffing of paper becomes serious. Therefore, it may be said that an abradant eraser which is excellent in erasing capability without roughening the paper is good.

In recent years, in such abradant-containing erasers as well, non polyvinyl chloride type erasers are proposed, considering the environment. For example, an eraser comprising a thermoplastic elastomer as a base material and an abradant in which said basic material is at least styrene-ethylene propylene-styrene block copolymers is proposed (for example, Patent Literature 7), and an eraser dispersing an abradant into a thermoplastic elastomer in which said thermoplastic elastomer contains at least styrene-ethylene butylene-styrene copolymers having carboxyl groups and/or acid anhydride rings is proposed (for example, Patent Literature 8).

### CITATION LIST

### PATENT LITERATURES

- Patent Literature 1:: Japanese Non-examined Patent Publication No. Hei 10(1998)-274494
- Patent Literature 2:: Japanese Non-examined Patent Publication No. 2000-95898
- Patent Literature 3:: Japanese Non-examined Patent Publication No. 2000-319446
- Patent Literature 4:: Japanese Non-examined Patent Publication No. 2003-183488
- Patent Literature 5:: Japanese Non-examined Patent Publication No. 2004-143315
- Patent Literature 6:: Japanese Non-examined Patent Publication No. 2000-43492 (Examples 1, 2)
- Patent Literature 7:: Japanese Non-examined Patent Publication No. Hei 5 (1993)-4495
- Patent Literature 8:: Japanese Non-examined Patent Publication No. Hei 5 (1993)-124390
Non Patent Literature 1: Gomu Kogyo Binran (Rubber Industry Handbook) (new edition, edited by The Society of Rubber Industry, Japan, published by The Society of Rubber Industry, Japan, Nov. 15, 1973, p. 817, Table 25.2),

### SUMMARY OF INVENTION

### TECHNICAL PROBLEM

However, in the above-mentioned conventional techniques, those obtained without vulcanizing or crosslinking rubber are insufficient in tensile strength or elasticity and therefore applications thereof are sometimes limited and, for instance, they are inadequate as materials for erasers since they do not exhibit rubber elasticity. Further, since a vulcanizing or crosslinking step is necessary, the production process not only becomes complicated, but also contains critical issue of safety of sulfur as a vulcanization agent and vulcanization chemical agents such as a vulcanization accelerator and an aid such as zinc oxide.

On the other hand, as described above, although the natural rubber erasers are suitable for satisfying the need for recycling society establishment, the natural rubber erasers are inferior in the erasing capability as compared with the vinyl chloride type erasers and since their production process includes a vulcanization step, the production process is complicated as compared with that for the vinyl chloride type erasers or non-vinyl chloride type erasers. Further, as described above, there is an issue of safety of sulfur and vulcanization chemical agents such as a vulcanization accelerator. Moreover, reuse of wastes generated in the production process is difficult, so that it results in uneconomical consequence and a problem in terms of productivity.
Further, in the conventional techniques, the abradant-containing eraser using thermoplastic elastomer corresponds to the need for non-employment of vinyl chloride but does not correspond to the need for recycling society called carbon neutral.

In view of the above state of the art, it is an object of the present invention to solve the above-mentioned problems of the conventional techniques and to provide an abradant-containing eraser comprising an elastomer composition provided with physical properties such as tensile strength and elasticity, which have never been obtained by conventional vulcanization or crosslinking, containing a matrix of a biomass plastic and crosslinked natural rubber particles dispersed like islands in the matrix, and an abradant, which not only corresponds to the need for recycling society, but also has excellent erasing capability.

### SOLUTION TO PROBLEM

The present invention has accomplished the above-mentioned object and a first aspect of the present invention is an abradant-containing eraser which comprises:
an elastomer composition containing a matrix of a biomass plastic and crosslinked natural rubber particles dispersed like islands in the matrix of the biomass plastic, and
an abradant.

A second aspect of the present invention is the abradant-containing eraser of the first aspect, wherein the biomass plastic is at least one kind compound selected from polylactic acid, polybutylene succinate, polyamide 11, poly-3-hydroxybutyrate, cellulose acetate, esterified starch, chitosan-cellulose-starch and starch-modified polyvinyl alcohol.

A third aspect of the present invention is the abradant-containing eraser of the first aspect, wherein the biomass plastic is a biodegradable biomass plastic.

A fourth aspect of the present invention is the abradant-containing eraser of any one of the first to third aspects, wherein the elastomer composition is an eraser composition containing 50 to 99% by weight of natural rubber, 50 to 1% by weight of a biomass plastic, and 0.1 to 5 parts by weight of a rubber crosslinking agent to 100 parts by weight of the natural rubber.

A fifth aspect of the present invention is the abradant-containing eraser of any one of the first to third aspects, wherein the elastomer composition is an elastomer eraser composition containing 20 to less than 50 % by weight of natural rubber, 80 to more than 50 % by weight of a biomass plastic, and 0.1 to 5 parts by weight of a rubber crosslinking agent to 100 parts by weight of the natural rubber.

A sixth aspect of the present invention is the abradant-containing eraser of any one of the first to fifth aspects, wherein the amount of the abradant is 10 to 500 parts by weight to 100 parts by weight of the total of the natural rubber and biomass plastic.

A seventh aspect of the present invention is the abradant-containing eraser of any one of the first to sixth aspects, wherein a softening agent is further contained.

An eighth aspect of the present invention is the abradant-containing eraser of the seventh aspect, wherein the softening agent is derived from biomass.

A ninth aspect of the present invention is the abradant-containing eraser of the seventh or eighth aspect, wherein the softening agent is selected from animal and plant oils and a plasticizer derived from these oils.

A tenth aspect of the present invention is the abradant-containing eraser of any one of the seventh to ninth aspects, wherein the amount of the softening agent is 1 to 200 parts by weight to 100 parts by weight of the total of the natural rubber and biomass plastic.

An eleventh aspect of the present invention is the abradant-containing eraser of any one of the first to tenth aspects, wherein a filler is further contained.

A twelfth aspect of the present invention is the abradant-containing eraser of the eleventh aspect, wherein the filler is derived from biomass.

A thirteenth aspect of the present invention is the abradant.-containing eraser of the eleventh or twelfth aspect, wherein the filler is selected from a shell powder and an eggshell powder.

A fourteenth aspect of the present invention is the abradant-containing eraser of any one of the eleventh to thirteenth aspects, wherein the amount of the filler is 10 to 1000 parts by weight to 100 parts by weight of the total of the natural rubber and biomass plastic.

A fifteenth aspect of the present invention is the abradant-containing eraser of any one of the first to fourteenth aspects, wherein a vinyl chloride resin is further contained.

A sixteenth aspect of the present invention is the abradant-containing eraser of the fifteenth aspect, wherein the vinyl chloride resin is a vinyl chloride resin composition containing 100 parts by weight of a vinyl chloride resin and 60 to 180 parts by weight of a plasticizer.

A seventeenth aspect of the present invention is a method for producing an abradant-containing eraser comprising the steps of:
melting and kneading an abradant-containing elastomer eraser which comprises the elastomer composition and an abradant, and a vinyl chloride resin eraser, and
molding the kneaded mixture.

An eighteenth aspect of the present invention is the method of the seventeenth aspect, wherein the amount of the abradant-containing elastomer eraser is 30 to 90% by weight and the amount of the vinyl chloride resin eraser is 70 to 10% by weight.

A nineteenth aspect of the present invention is the method of the seventeenth or eighteenth aspect, wherein the vinyl chloride resin eraser is wastes generated at the time of molding.

### ADVANTAGEOUS EFFECTS OF INVENTION

The abradant-containing eraser of the present invention uses the materials as raw materials not relying on the fossil resources, i.e., all natural rubber and biomass plastics derived from biomass and accordingly, even if they are disposed, carbon dioxide in the atmospheric air is not increased and thus they are elastomer compositions, which are friendly to the environment. Further, when biodegradable plastics as the biomass plastics as well as various additives derived from biomass are used, it can be made possible to provide further environmentally adequate erasers which are decomposed in natural environments.

Further, since the elastomer compositions of the present invention are thermoplastic elastomers, the wastes generated at the time of molding can be easily recycled and accordingly, it leads to cost down and is thus adequate to the resource recycling society.

Further, in the elastomer composition production methods of the present invention, since kneading of natural rubber and biomass plastics and crosslinking of the natural rubber are simultaneously carried out, the process can be simplified and the productivity is high. Further, vulcanization agents and vulcanization accelerators such as sulfur and zinc oxide are not used for crosslinking the natural rubber, the safety is also high.

Furthermore, the abradant-containing erasers made of the elastomer compositions of the present invention, if vinyl chloride resin, preferably an eraser made of the vinyl chloride resin, more preferably wastes of the eraser generated at the time of molding are further contained, the dependency on fossil resources can be lessened and recycling property can be increased to thereby to achieve the effective utilization of the resources.

### DESCRIPTION OF EMBODIMENTS

The abradant-containing erasers of the present invention are characterized in that the elastomer compositions are used which have a sea-island structure in which a matrix (sea) of a biomass plastic, crosslinked natural rubber particles are dispersed like islands in the matrix.
The natural rubber to be used in the present invention can be classified into sheet rubber, pale crepe, brown crepe, blanket crepe, block rubber, and crumb rubber, according to a method for processing the rubber from latex into solid type rubber, and various ranking grades are made available, and any natural rubber may be used regardless of production areas. Further, natural rubber derivatives, for example, epoxylated natural rubber, may also be used. They may be used alone or if necessary, two or more types may be used in combination.

The biomass plastics to be used in the present invention can be classified into a chemical synthesis type, a microorganism production type, and natural type, which are derived from the biomass, i.e., materials derived from plants. The chemical synthesis type may include polylactic acid type resins (e.g. LACE®, manufactured by Mitsui Chemicals, Inc.) obtained by polymerizing lactic acid which is produced by fermenting saccharides and starch derived from corn, potato and sugarcane; polybutylene succinate type resins (e.g. GS-Pla, manufactured by Mitsubishi Chemical Corporation) produced from succinic acid derived from starch and 1,4-butane diol as a raw material; and polyamide 11 (e.g. Rilsan® B, manufactured by ARKEMA) produced from castor oil as a raw material. The microorganism production type may include poly-3-hydroxybutyrate type resins such as poly-3-hydroxybutyrate (e.g. Biogreen, manufactured by Mitsubishi Gas Chemical Company, INC.) and copolymers of 3-hydroxybutyrate and 3-hydroxyhexanoate (e.g. PHBH manufactured by Kaneka Corporation).

As the copolymers of 3-hydroxybutyrate and 3-hydroxyhexanoate, poly (3-hydroxybutyrate-co-3-hydroxyhexanoate (hereinafter referred to as PHBH) is preferable.
The PHBH is, as described in Japanese Non-examined Patent Publication No.2007-77232, produced from microorganisms and the composition ratio of the repeating unit is preferably in that poly (3-hydroxybutyrate) / poly (3-hydroxyhexanoate) is not less than 80/20 and not more than 99/1 (mol/mol) from a viewpoint of the balance of flexibility and strength. By changing the composition ratio of the repeating unit, it is possible to change a melting point and a degree of crystallinity and further to change physical properties such as Young's modulus and heat resistance so that the physical properties ranging from polypropylene to polyethylene can be imparted.
The natural type may include cellulose acetate (e.g. CELGREEN PCA, manufactured by Daicel Chemical Industries, Ltd.); esterified starch (e.g. Cornpole, manufactured by Nihon Cornstarch Corporation), chitosan-cellulose-starch (e.g. Dolon CC, manufactured by Aicello Chemical Co., Ltd.); starch-modified polyvinyl alcohol (e.g. Mater-Bi, manufactured by Novamont). They may be used alone or if necessary, two or more kinds of them may be used in combination.
Use of biodegradable materials, which are regenerable resources, as biomass plastics makes it possible to obtain further improved environmentally friendly elastomer compositions.

With respect to the composition ratio of the natural rubber and biomass plastics, the natural rubber is preferably in a range of 20 to 99 % by weight and the biomass plastics in a range of 80 to 1 % by weight. If the biomass plastics are less than 1% by weight, the fluidity of the elastomer compositions is worsened to cause a problem of moldability. If the biomass plastics exceed 80% by weight, the elastomer compositions become too hard to exhibit rubber elasticity, and for instance, in the case of using them as base materials for erasers, it tends to become difficult to obtain a sufficient erasing capability.
Further, as the erasers having a relatively low hardness giving less damage to the paper and for erasing a relatively wide space, the natural rubber is preferably in a range of 50 to 99% by weight and the biomass plastics in a range of 50 to 1% by weight, more preferably, the natural rubber in a range of 70 to 95% by weight and the biomass plastics in a range of 30 to 5% by weight.
Furthermore, as the erasers having a relatively high hardness and for erasing a relatively narrow space with a high erasing capability, the natural rubber is preferably in a range of 20 to less than 50% by weight and the biomass plastics is preferably in a range of 80 to more than 50% by weight, more preferably, the natural rubber in a range of 30 to 45 and the biomass plastics in a range of 70 to 55% by weight.

The rubber crosslinking agents to be used preferably in the present invention may be organic peroxides. Practical examples are dicumyl peroxide (e.g. PERCUMYL® D, manufactured by NOF Corporation), 2,5-dimethyl-2,5-di-tert-butyl peroxyhexane (e.g. PERHEXA 25B, manufactured by NOF Corporation), di-tert-butylperoxydiisopropylbenzene (e.g. PERBUTYL P, manufactured by NOF Corporation), and 2,5-dimethyl-2,5-di-tert-butylperoxyhexyne-3 (e.g. PERHEXYNE® 25 B, manufactured by NOF Corporation). Additionally, other organic vulcanization agents may also be used. Practical examples are N,N'-m-phenylene dimaleimide (e.g. VULNOC PM, manufactured by Ouchi Shinko Chemical Industrial Co., Ltd.), p-quinonedioxime (e.g. VULNOC GM, manufactured by Ouchi Shinko Chemical Industrial Co., Ltd.), and alkylphenol-formaldehyde resin (e.g. TACKROL®) 201, manufactured by Taoka Chemical Co., Ltd.). They may be used alone or if necessary, two or more kinds of them may be used in combination.

The rubber crosslinking agents may be used in an amount of 0.1 to 5.0 parts by weight to 100 parts by weight of natural rubber. If the amount of the rubber crosslinking agents is less than 0.1 part by weight, the crosslinking becomes insufficient and the natural rubber does not become particles, and therefore, it becomes impossible to obtain an aimed structure and on the other hand, if the amount exceeds 5.0 parts by weight, the impact resilience of the crosslinked rubber particles tends to become so high to cause a problem of moldability.

The elastomer compositions of the present invention may contain various kinds of additives to be used in fields of biomass plastic materials and natural rubber materials. Examples of such additives are ultraviolet absorbents, hindered amine type photo-stabilizers, weathering resistance improvers such as antioxidants, and lubricants of such as higher fatty acid alcohols, aliphatic amides, metal soaps, and fatty acid esters.

Each elastomer composition of the present invention can be obtained by putting a biomass plastic, natural rubber, a rubber crosslinking agent, and if necessary, a softening agent, and a filler in a kneader and kneading them at a temperature not lower than the melting temperature of the biomass plastic and not lower than the crosslinking temperature of the rubber crosslinking agent.
The kneading is preferable to be carried out under high shearing condition. Examples of such a kneader may be a biaxial kneading extruder, a Bambury mixer, a pressurizing kneader, and a mixing roll and among them is preferably the biaxial kneading extruder.
The word "a temperature not lower than the melting temperature of the biomass plastics" preferably means a temperature higher than the melting temperature of the biomass plastic by 10 to 50°C and the word "a temperature not lower than the crosslinking temperature of the rubber crosslinking agent" preferably means a temperature higher than the crosslinking temperature of the rubber crosslinking agent by 5 to 20°C.

The elastomer compositions of the present invention have excellent elasticity and cushioning property and are thus useful for base materials for erasers. The reason therefor is supposedly attributed to that the rubber component is cut in the course of kneading.

The abradants used in the present invention are not particularly limited, including such as carborundum, emery, silica rock, quartz sand, white sand (sirasu), glass powder, molten alumina and the like. They may be used alone or if necessary, two more of them may be used in combination. The particle size is from 100 to 300 meshes. The erasing capability can be increased by employing abradants surface-treated with a coupling agent such as silane coupling agents.
The addition amount of the abradants may be determined depending on objects to be erased, i.e., the erasing capability required, but the abradant may usually preferably be used in an amount of 10 to 500 parts by weight to 100 parts by weight of the total of the natural rubber and biomass plastic. If the amount of the abradant is less than 10 parts by weight, the erasing capability tends to be insufficient, and on the other hand, if the amount exceeds 500 parts by weight, the moldability tends to be deteriorated and a fear of damaging the paper erased tends to be increased.
The abradant may be added at the step of producing the elastomer composition, but it is preferable to be added at the step of molding the eraser which is the final step since there is a fear of damaging a kneader and the like.

The elastomer composition and the abradant may further contain other additives such as a softening agent, a filler, an organic or inorganic pigment, a coloring material such as dyes, a fragrance, a stabilizer, an antioxidant, a UV absorbent, and an anti-mold agent to give abradant-containing eraser compositions.

Examples of the softening agent may be mineral oils, animal and plant oils, and plasticizers derived from them.
Practical examples of the mineral oils are paraffin type process oil, naphthene type process oil, and aromatic type process oil. Practical examples of the animal and plant oils are rapeseed oil, rapeseed refined oil, castor oil, cotton seed oil, linseed oil, soy oil, sesame oil, corn oil, safflower oil, palm oil, coconut oil, peanut oil, Japan tallow, rosin, pine tar, and tall oil. Plasticizers derived from animal and plant oils may include glycerin fatty acid esters and practical examples may be glycerin diacetomonolaurate, glycerin triacetate, and glycerol diacetate. They may be used alone or if necessary, two or more of them may be used in combination. In terms of availability of elastomer compositions with further improved environmental friendliness, animal and plant oils derived from biomass, which are regenerable resources, or plasticizers derived from them are more preferable to be used.
The addition amount of the softening agent is 1 to 200 parts by weight to 100 parts by weight of a mixture of the natural rubber and biomass plastics. It is preferably 10 to 150 parts by weight. If the softening agent is less than 1 part by weight, the addition amount of the softening agent is insufficient and on the other hand, if it exceeds 200 parts by weight, it may possibly result in occurrence of bleeding.

Examples of the fillers may be heavy calcium carbonate, light calcium carbonate, silica, diatomaceous earth, magnesium oxide, titanium oxide, talc, sericite, quartz powder, montmorillonite, shell powder of scallop, oyster, and freshwater clam, eggshell powder, organic hollow particles, and inorganic hollow particles. They may be used alone or if necessary, two or more of them may be used in combination. In terms of availability of elastomer compositions with further improved environmental friendliness, shell powders of scallop and oyster and eggshell powder derived from biomass, which are generated in a large quantity as wastes, are more preferable to be used.
The addition amount of the filler is 10 to 1000 parts by weight to 100 parts by weight of a mixture of the natural rubber and biomass plastics. It is preferably 50 to 500 parts by weight. If the filler is less than 10 parts by weight, the addition amount of the filler is insufficient and on the other hand, if it exceeds 1000 parts by weight, the composition may possibly become hard and no sufficient rubber elasticity can be exhibited, and in the case of using the composition as a base material for an eraser, it tends to become difficult to obtain sufficient erasing capability.

The abradant-containing erasers of the present invention are obtained by molding the abradant-containing eraser compositions by press molding, injection molding, and extrusion molding or the like, and cutting molded products into prescribed sizes to give erasers.

The erasers made of elastomers and abradants (hereinafter, referred to as an abradant-containing elastomer eraser) obtained in the above-mentioned manner can be improved in the erasing capability by further adding a vinyl chloride resin, preferably, an eraser of a vinyl chloride resin (hereinafter, referred to as a vinyl chloride resin eraser).
Such erasers with higher erasing capability can be obtained by melting and kneading the above-mentioned abradant-containing elastomer eraser composition and a vinyl chloride resin with other additives such as a softening agent, a filler, a plasticizer, a coloring agent, and a fragrance and molding the mixture, however, it is more preferable to mix the above-mentioned abradant-containing elastomer eraser and vinyl chloride resin eraser and to melt and knead the mixture since the wastes generated at the time of molding the vinyl chloride resin eraser can be utilized effectively. Accordingly, this preferable method will be described below.

The vinyl chloride resin to be used for the vinyl chloride resin eraser in the present invention is not particularly limited and conventionally known vinyl chloride resins are used, and the both paste resin and straight resin may be used. A plasticizer may be added to the vinyl chloride resin and further based on the necessity, additives such as a stabilizer, a coloring agent, and a fragrance may also be added arbitrarily.

Examples of the plasticizer may include phthalic acid ester type plasticizers such as dioctyl phthalate (DOP), dinonyl phthalate (DNP), diisononyl phthalate (DINP), diisodecyl phthalate (DIDP), ditridecyl phthalate (DTDP), and diundecyl phthalate (DUP); trimellitic acid ester type plasticizers such as diisooctyl trimellitate (TIOTM); and polyester type plasticizers, and they may be used alone or if necessary, two or more kinds of them may be used in combination.
The addition amount of the plasticizer is 60 to 180 parts by weight and preferably 100 to 160 parts by weight to 100 parts by weight of the vinyl chloride resin. If it is less than 100 parts by weight, the composition may possibly become so hard to exhibit a sufficient erasing capability and on the other hand, if it exceeds 160 parts by weight, it may possibly result in occurrence of bleeding.

In the cases of a paste resin, an eraser composition containing the paste resin, a plasticizer and if necessary other additives is kneaded and defoamed and thereafter, the composition is poured into a metal mold for molding with a prescribed depth, heated for a prescribed time and then cooled, then taken out of the metal mold and cut into prescribed size to obtain erasers.
On the other hand, in the case of a straight resin, an eraser composition containing the straight resin, a plasticizer and if necessary other additives is molded by an injection molding machine, an extrusion molding machine or the like and cut into prescribed size to obtain erasers.

As described above, the abradant-containing elastomer erasers and the vinyl chloride resin erasers are mixed at a prescribed ratio and kneaded by a heated kneader and cooled, and successively crushed into pellets and then the pellets are molded by injection molding, extrusion molding or the like and cut into prescribed size to obtain abradant-containing erasers of the present invention.
The mixing ratio of the abradant-containing elastomer erasers and vinyl chloride resin erasers is not particularly limited and in the case recycling and lessening of a load on environments are considered to be more important, the ratio of the former, namely, the abradant-containing elastomer erasers, is increased and on the other hand, if the effective utilization of the wastes of the vinyl chloride resin erasers is considered to be more important, the ratio of the latter, namely, the vinyl chloride resin erasers, may be increased, however, if the ratio of the vinyl chloride resin eraser is too little, the effect of lessening the load on the environment, which is an aim of this invention, becomes small. Accordingly, the abradant-containing elastomer erasers are preferably in a range of 30 to 90% by weight and the vinyl chloride resin erasers are in a range of 70 to 10% by weight and the abradant-containing elastomer erasers are more preferably, in a range of 30 to 80% by weight and the vinyl chloride resin erasers are in a range of 70 to 20% by weight. If the ratio of the vinyl chloride resin erasers exceeds 70% by weight, the load on the environment tends to be increased.
In the step of scrapping, the erasers made of the abradant-containing eraser and the vinyl chloride resin eraser are biodegradablly decomposed in advance at the step of the compost and the like so that vinyl chloride resin can be separated and recovered.

### EXAMPLES

Hereinafter, the present invention will be explained in more detail with reference to Examples, however it is not intended that the present invention be limited to them.
Materials employed in the following Examples and Reference Example are shown in Table 1.

**Table 1**

| Product name | Material name | Maker |
|---|---|---|
| RSS#1 | natural rubber | Produced in Indonesia |
| LACEA® H-100 | biomass plastics: | Mitsui Chemicals, Inc. |
| | polylactic acid | |
| | (melting temperature: 164°C) | |
| PHBH | 3-hydroxybutyrate-co- | Kaneka Corporation |
| | 3-hydroxyhexanoate | |
| | (melting temperature: 120°C) | |
| RlKEMAL PL-004 | softening agent: | Riken Vitamin Co., Ltd. |
| | glycerin diacetomonolaurate | |
| SS#80 | filler: | Nitto Funka Kogyo K.K. |
| | heavy calcium carbonate | |
| PERCUMYL® D-40 | rubber crosslinking agent: | NOF Corporation |
| | 40% diluted product of dicumyl peroxide (crosslinking temperature: 150-180°C) | |
| PERHEXA® C-40 | 40% diluted product of 1,1-di (t-butylperoxy) cyclohexane (crosslinking temperature: 120-150°C) | NOF Corporation |
| ZEST P-21 | vinyl chloride resin | Shin Dai-Ichi Vinyl Corporation |
| DOP | plasticizer: dioctyl phthalate | J-Plus Co., Ltd. |
| NS#400 | filler: | Nitto Funka Kogyo K.K. |
| | heavy calcium carbonate | |
| ES-A | stabilizer: | Namariichi Chemical |
| | calcium stearate | Industrial Co., Ltd. |
| ES-Z | stabilizer: | Namariichi Chemical |
| | zinc stearate | Industrial Co., Ltd. |
| HI-SILICA F2 | abradant | Nitchitsu Co., Ltd. |
| | silica rock (more than 200 meshes) | |
| HI-SILICA H | abradant | Nitchitsu Co.., Ltd. |
| | silica rock (60-325 meshes) | |
| WHITE ABRACS | abradant | Saint-Gobain |
| WAF220 | alumina (200 - 330 meshes) | |
| GB-AF | abradant | Potters-Ballotini Co., |
| | glass beads (120-200 meshes) | Ltd. |

### Examples 1 to 11

The natural rubber, softening agents, and fillers among the materials shown in Table 2 were previously kneaded by a pressurizing kneader and the rubber crosslinking agents were added using rolls to obtain kneaded rubber materials. The obtained kneaded rubber materials were cut into pellets with about 5 mm square. Next, using a biaxial extruder KZW-15TW-60 (completely intermeshed type in same directions, screw diameter 15 mm, L/D = 60) manufactured by Technovel Corporation, the kneaded rubber pellets and biomass plastic pellets were supplied at the mixing ratio as shown in Table 2 by respective quantitative supplying units and kneaded at a screw rotation speed of 400 rpm. In the case of PHBH (Melting point 120°C) as the biomass plastic, the cylinder temperature was set at 120 to 160°C, so that the kneading temperature was adjusted not lower than the melting point of the biomass plastics and not lower than the rubber crosslinking temperature (150°C), and in the case of LACEA® H-100 (Melting point 164°C), the cylinder temperature was set at 120 to 190°C, so that the keading temperature was adjusted not lower than the melting point and not lower than the rubber crosslinking temperature (180°C).
The obtained composition pellets were added with the abradant, and extrusion-molded into a square rod-like shape by a uniaxial extruder (cylinder temperature 90 to 110°C, and head temperature 120°C) and cut into abradant-containing erasers (size: 12 × 18 × 43mm).

As the properties of the erasers, the hardness was measured using C type hardness meter (Type C hardness meter, manufactured by Kobunshi Keiki Co., Ltd.) according to JIS S 6050 Plastic Erasers, and the erasing capability (the erasing ratio) was measured according to JIS S 6004-1994. The results are shown in Table 2.

**Table 2**

| | | Example | | | | | | | | | | |
|---|---|---|---|---|---|---|---|---|---|---|---|---|
| Composition | | 1 | 2 | 3 | 4 | 5 | 6 | 7 | 8 | 9 | 10 | 11 |
| Natural rubber | RSS#1 | 100 | 100 | 100 | 100 | 100 | 100 | 100 | 100 | 100 | 100 | 100 |
| Biomass plastic | PHBH | 45 | 45 | 45 | 45 | 50 | | | | | 150 | 200 |
| | LACEA® H-100 | | | | | | 45 | 50 | 50 | 100 | | |
| Softening agent | RIKEMAL PL-004 | 80 | 80 | 80 | 80 | 80 | 80 | 80 | 80 | 80 | 80 | 80 |
| Filler | SS#80 | 100 | 100 | 100 | 100 | 100 | 100 | 100 | 100 | 100 | 100 | 100 |
| Rubber crosslinking agent | PERHEXA® C-40 | 2 | 2 | 2 | 2 | 2 | | | | | 2 | 2 |
| | PERCUMYL® D-40 | | | | | | 2 | 2 | 2 | 2 | | |
| Abradant | HI-SILICA F2 | 100 | 50 | | | 100 | 50 | 100 | 100 | 150 | 180 | 220 |
| | HI-SILICA H | | 50 | | | 50 | 50 | 50 | 100 | 100 | 100 | 100 |
| | WHITE-ABRACS WAF 220 | | | 100 | | | | | | | | |
| | GB-AF | | | | 100 | | | | | | | |
| Properties | Hardness (C type) | 83 | 82 | 83 | 85 | 88 | 86 | 90 | 90 | 98 | 99 | 99 |
| | Erasing ratio (%) | 97 | 97 | 97 | 97 | 97 | 98 | 98 | 98 | 99 | 99 | 99 |

### Reference Example 1: Production of vinyl chloride resin eraser

As shown in Table 3, the vinyl chloride resin, the plasticizer, the filler, and the stabilizer were mixed and stirred to obtain a paste sol. After the obtained paste sol was vacuum defoamed, the paste sol was poured into a metal mold (inner size: 100×100×10 mm) for molding set at 130°C, heated for 26 minutes and cooled, then, taken out of the metal mold, and cut into a vinyl chloride resin eraser (size: 10×18×43 mm).
The hardness and the erasing ratio of the obtained erasers were measured and evaluated in the same methods as in Examples 1 to 11. The results are shown in Table 3.

**Table 3**

| Reference Example 1 | | |
|---|---|---|
| Vinyl chloride resin | ZEST P-21 | 100 |
| Plasticizer | DOP | 160 |
| Filler | NS#400 | 100 |
| Stabilizer | ES-A | 0.5 |
| | ES-Z | 0.5 |
| Properties | Hardness (C type) | 60 |
| | Erasing ratio (%) | 97.7 |

### Examples 12 to 13

The abradant-containing elastomer erasers obtained in Examples 3 and 7 and the vinyl chloride resin eraser obtained in Reference Example 1 were mixed at mixing ratios shown in Table 4 and kneaded for 5 minutes by a pressurizing kneader set at 120°C. After the obtained compositions were cooled, the compositions were crushed into pellets and the pellets were extrusion-molded into a prescribed shape by a uniaxial extruder and cut to produce erasers (size: 12×18×43 mm)
The hardness and the erasing ratio of the obtained erasers were measured and evaluated in the same methods as in Examples 1 to 11. The results are shown in Table 4.

**Table 4**

| | | Example 12 | Example 13 |
|---|---|---|---|
| Abradant-containing elastomer eraser used (% by weight) | | Example 3 | Example 7 |
| Elastomer eraser mentioned above (% by weight) | | 80 | 80 |
| Vinyl chloride resin eraser of Reference Example 1 (% by weight) | | 20 | 20 |
| Properties | Hardness (C type) | 81 | 88 |
| | Erasing ratio (%) | 97 | 98 |

### INDUSTRIAL APPLICABILITY

As described above, since the abradant-containing eraser of the present invention uses an elastomer composition comprising a biomass plastic derived form biomass and natural rubber as main components, it is capable of providing the eraser excellent in safety, which does not depend on fossil resources and is recycled without increasing carbon dioxide in the atmospheric air even if being discarded and thus it is friendly to the environment and responds to recycling societies. Further, combination use of a vinyl chloride resin, especially, wastes generated at the time of molding as a base material for an eraser makes it possible to lessen the dependency on fossil resources and to enhance recycling properties to thereby lead to the effective utilization of resources. Moreover, use of a biodegradable biomass plastic as the biomass plastic and the various additives derived from biomass makes it possible to provide the abradant-containing eraser which are provided with further improved environmental friendliness which can be decomposed in natural environments.

## Claims

1. An abradant-containing eraser which comprises:
an elastomer composition containing a matrix of a biomass plastic and crosslinked natural rubber particles dispersed like islands in the matrix of the biomass plastic, and
an abradant having a particle size from 100 to 300 mesh.

2. The abradant-containing eraser of claim 1, wherein the biomass plastic is at least one kind of compound selected from polylactic acid, polybutylene succinate, polyamide 11, poly-3-hydroxybutyrate, cellulose acetate, esterified starch, chitosan-cellulose-starch and starch-modified polyvinyl alcohol.

3. The abradant-containing eraser of claim 1, wherein the biomass plastic is a biodegradable biomass plastic.

4. The abradant-containing eraser of any one of claims 1 to 3,
wherein the elastomer composition is an eraser composition containing 50 to 99% by weight of natural rubber, 50 to 1% by weight of a biomass plastic, and 0.1 to 5 parts by weight of a rubber crosslinking agent to 100 parts by weight of the natural rubber.

5. The abradant-containing eraser of any one of claims 1 to 3,
wherein the elastomer composition is an elastomer eraser composition containing 20 to less than 50 % by weight of natural rubber, 80 to more than 50 % by weight of a biomass plastic and 0:1 to 5 parts by weight of a rubber crosslinking agent to 100 parts by weight of the natural rubber.

6. The abradant-containing eraser of any one of claims 1 to 5,
wherein the amount of the abradant is 10 to 500 parts by weight to 100 parts by weight of the total of the natural rubber and biomass plastic.

7. The abradant-containing eraser of any one of claims 1 to 6,
wherein a softening agent is further contained.

8. The abradant-containing eraser of claim 7, wherein the softening agent is derived from biomass.

9. The abradant-containing eraser of claim 7 or 8, wherein the softening agent is selected from animal and plant oils and a plasticizer derived from these oils.

10. The abradant-containing eraser of any one of claims 7 to 9,
wherein the amount of the softening agent is 1 to 200 parts by weight to 100 parts by weight of the total of the natural rubber and biomass plastic.

11. The abradant-containing eraser of any one of claims 1 to 10, wherein a filler is further contained.

12. The abradant-containing eraser of claim 11, wherein the filler is derived from biomass.

13. The abradant-containing eraser of claim 11 or 12, wherein the filler is selected from a shell powder and an eggshell powder.

14. The abradant-containing eraser of any one of claims 11 to 13,
wherein the amount of the filler is 10 to 1000 parts by weight to 100 parts by weight of the total of the natural rubber and biomass plastic.

15. The abradant-containing eraser of any one of claims 1 to 14,
wherein a vinyl chloride resin is further contained.

16. The abradant-containing eraser of claim 15, wherein the vinyl chloride resin is a vinyl chloride resin composition containing 100 parts by weight of a vinyl chloride resin and 60 to 180 parts by weight of a plasticizer.

17. A method for producing an abradant-containing eraser comprising the steps of:
melting and kneading an abradant-containing elastomer eraser which comprises the elastomer composition and an abradant having a particle size from 100 to 300 mesh, and a vinyl chloride resin eraser which comprises a vinyl chloride resin composition, and
molding the kneaded mixture.

18. The method of claim 17, wherein the amount of the abradant-containing elastomer eraser is 30 to 90% by weight and the amount of the vinyl chloride resin eraser is 70 to 10% by weight.

19. The method of claim 17 or 18, wherein the vinyl chloride resin eraser is wastes generated at the time of molding.

## Patentansprüche

1. Ein schleifmittelhaltiger Radierer, welcher umfasst:
eine Elastomerzusammensetzung umfassend eine Matrix aus Biomasse-Kunststoff und vernetzten Naturkautschukteilchen, die wie Inseln in der Matrix aus dem Biomasse-Kunststoff verteilt sind, und
ein Schleifmittel, das eine Teilchengröße von 100 bis 300 Mesh aufweist.

2. Der schleifmittelhaltige Radierer gemäß Anspruch 1, wobei der Biomasse-Kunststoff mindestens eine Art an Verbindung ist, die aus Polymilchsäure, Polybutylensuccinat, Polyamid 11, Poly-3-hydroxybuttersäureester, Celluloseacetat, veresterter Stärke, Chitosan-Cellulose-Stärke und mit Stärke modifiziertem Polyvinylalkohol ausgewählt ist.

3. Der schleifmittelhaltige Radierer gemäß Anspruch 1, wobei der Biomasse-Kunststoff ein biologisch abbaubarer Biomasse-Kunststoff ist.

4. Der schleifmittelhaltige Radierer gemäß einem der Ansprüche 1 bis 3, wobei die Elastomerzusammensetzung eine Radiererzusammensetzung ist, die 50 bis 99 Gewichts-% an Naturkautschuk, 50 bis 1 Gewichts-% an Biomasse-Kunststoff und 0,1 bis 5 Gewichtsteile eines Kautschuk vernetzenden Mittels in Bezug auf 100 Gewichtsteile des Naturkautschuks enthält.

5. Der schleifmittelhaltige Radierer gemäß einem der Ansprüche 1 bis 3, wobei die Elastomerzusammensetzung eine Elastomerradiererzusammensetzung ist, die 20 bis weniger als 50 Gewichts-% an Naturkautschuk, 80 bis mehr als 50 Gewichts-% an Biomasse-Kunststoff, und 0,1 bis 5 Gewichtsteile eines Kautschuk vernetzenden Mittels in Bezug auf 100 Gewichtsteile des Naturkautschuks enthält.

6. Der schleifinittelhaltige Radierer gemäß einem der Ansprüche 1 bis 5, wobei die Menge an Schleifmittel 10 bis 500 Gewichtsteile in Bezug auf 100 Gewichtsteile der Gesamtmenge des Naturkautschuks und des Biomasse-Kunststoffs beträgt.

7. Der schleifmittelhaltige Radierer gemäß einem der Ansprüche 1 bis 6, wobei ferner ein weichmachendes Mittel enthalten ist.

8. Der schleifmittelhaltige Radierer gemäß Anspruch 7, wobei das weichmachende Mittel von Biomasse abgeleitet ist.

9. Der schleifmittelhaltige Radierer gemäß Anspruch 7 oder 8, wobei das weichmachende Mittel aus tierischen oder pflanzlichen Ölen und einem Weichmacher, der aus diesen Ölen abgeleitet ist, ausgewählt ist.

10. Der schleifmittelhaltige Radierer gemäß einem der Ansprüche 7 bis 9, wobei die Menge an weichmachendem Mittel 1 bis 200 Gewichtsteile in Bezug auf 100 Gewichtsteile der Gesamtmenge des Naturkautschuks und des Biomasse-Kunststoffs beträgt.

11. Der schleifmittelhaltige Radierer gemäß einem der Ansprüche 1 bis 10, wobei ferner ein Füllstoff enthalten ist.

12. Der schleifmittelhaltige Radierer gemäß Anspruch 11, wobei der Füllstoff von Biomasse abgeleitet ist.

13. Der schleifmittelhaltige Radierer gemäß Anspruch 11 oder 12, wobei der Füllstoff aus Muschelpulver oder Eierschalenpulver ausgewählt ist.

14. Der schleifmittelhaltige Radierer gemäß einem der Ansprüche 11 bis 13, wobei die Menge an Füllstoff 10 bis 1000 Gewichtsteile in Bezug auf 100 Gewichtsteile der Gesamtmenge des Naturkautschuks und des Biomasse-Kunststoffs beträgt.

15. Der schleifmittelhaltige Radierer gemäß einem der Ansprüche 1 bis 14, wobei ferner ein Vinylchloridharz enthalten ist.

16. Der schleifmittelhaltige Radierer gemäß Anspruch 15, wobei das Vinylchloridharz eine Vinylchloridharzzusammensetzung ist, die 100 Gewichtsteile eines Vinylchloridharzes und 60 bis 180 Gewichtsteile eines Weichmachers enthält.

17. Ein Verfahren zur Herstellung eines schleifmittelhaltigen Radierers, umfassend die Schritte:
Schmelzen und Kneten eines schleifmittelhaltigen Elastomerradierers, welcher die Elastomerzusammensetzung und ein Schleifmittel, das eine Partikelgröße von 100 bis 300 Mesh aufweist, umfasst und eines Vinylchloridharzradierers, welcher eine Vinylchloridharzzusammensetzung umfasst, und Formen des gekneteten Gemischs.

18. Das Verfahren gemäß Anspruch 17, wobei die Menge an schleifmittelhaltigem Elastomerradierer 30 bis 90 Gewichts-% und die Menge an Vinylchloridharzradierer 70 bis 10 Gewichts-% beträgt.

19. Das Verfahren gemäß Anspruch 17 oder 18, wobei der Vinylchloridharzradierer Abfall ist, der zum Zeitpunkt des Formens gebildet wird.

## Revendications

1. Gomme contenant un abrasif qui comprend :
une composition élastomère contenant une matrice d'un bioplastique et des particules de caoutchouc naturel réticulé dispersées comme des îlots dans la matrice du bioplastique, et
un abrasif ayant une granulométrie de 100 à 300 mesh.

2. Gomme contenant un abrasif selon la revendication 1, dans laquelle le bioplastique est au moins un type de composé choisi parmi l'acide polylactique, le succinate de polybutylène, le polyamide 11, le poly-3-hydroxybutyrate, un acétate de cellulose, un amidon estérifié, un mélange d'amidon-cellulose-chitosan et un alcool polyvinylique modifié par de l'amidon.

3. Gomme contenant un abrasif selon la revendication 1, dans laquelle le bioplastique est un bioplastique biodégradable.

4. Gomme contenant un abrasif selon l'une quelconque des revendications 1 à 3, dans laquelle la composition élastomère est une composition de gomme contenant de 50 à 99 % en poids de caoutchouc naturel, de 50 à 1 % en poids d'un bioplastique, et de 0,1 à 5 parties en poids d'un agent de réticulation du caoutchouc pour 100 parties en poids du caoutchouc naturel.

5. Gomme contenant un abrasif selon l'une quelconque des revendications 1 à 3, dans laquelle la composition élastomère est une composition de gomme élastomère contenant de 20 à moins de 50 % en poids de caoutchouc naturel, de 80 à plus de 50 % en poids d'un bioplastique, et de 0,1 à 5 parties en poids d'un agent de réticulation du caoutchouc pour 100 parties en poids du caoutchouc naturel.

6. Gomme contenant un abrasif selon l'une quelconque des revendications 1 à 5, dans laquelle la quantité d'abrasif est de 10 à 500 parties en poids pour 100 parties en poids du total du caoutchouc naturel et du bioplastique.

7. Gomme contenant un abrasif selon l'une quelconque des revendications 1 à 6, dans laquelle un agent plastifiant est en outre présent.

8. Gomme contenant un abrasif selon la revendication 7, dans laquelle l'agent plastifiant est dérivé de la biomasse.

9. Gomme contenant un abrasif selon la revendication 7 ou 8, dans laquelle l'agent plastifiant est choisi parmi des huiles animales et végétales et un plastifiant dérivé de ces huiles.

10. Gomme contenant un abrasif selon l'une quelconque des revendications 7 à 9, dans laquelle la quantité d'agent plastifiant est de 1 à 200 parties en poids pour 100 parties en poids du total du caoutchouc naturel et du bioplastique.

11. Gomme contenant un abrasif selon l'une quelconque des revendications 1 à 10, dans laquelle une charge est en outre présente.

12. Gomme contenant un abrasif selon la revendication 11, dans laquelle la charge est dérivée de la biomasse.

13. Gomme contenant un abrasif selon la revendication 11 ou 12, dans laquelle la charge est choisie parmi une poudre de coquille de coquillage et une poudre de coquille d'oeuf.

14. Gomme contenant un abrasif selon l'une quelconque des revendications 11 à 13, dans laquelle la quantité de la charge est de 10 à 1000 parties en poids pour 100 parties en poids du total du caoutchouc naturel et du bioplastique.

15. Gomme contenant un abrasif selon l'une quelconque des revendications 1 à 14, dans laquelle une résine de chlorure de vinyle est en outre présente.

16. Gomme contenant un abrasif selon la revendication 15, dans laquelle la résine de chlorure de vinyle est une composition de résine de chlorure de vinyle contenant 100 parties en poids d'une résine de chlorure de vinyle et de 60 à 180 parties en poids d'un plastifiant.

17. Procédé de production d'une gomme contenant un abrasif comprenant les étapes de :
fusion et malaxage d'une gomme élastomère contenant un abrasif qui comprend la composition élastomère et un abrasif ayant une granulométrie de 100 à 300 mesh, et une gomme de résine de chlorure de vinyle qui comprend une composition de résine de chlorure de vinyle, et
moulage du mélange malaxé.

18. Procédé selon la revendication 17, dans lequel la quantité de la gomme élastomère contenant un abrasif est de 30 à 90 % en poids et la quantité de la gomme de résine de chlorure de vinyle est de 70 à 10 % en poids.

19. Procédé selon la revendication 17 ou 18, dans lequel la gomme de résine de chlorure de vinyle est un déchet généré au moment du moulage.
